Europäisches Patentamt

European Patent Office

Office européen des brevets

(19)

(11) Numéro de publication: **0 241 337**
**B1**

(12) **FASCICULE DE BREVET EUROPEEN**

(45) Date de publication du fascicule du brevet: **02.05.90**

(51) Int. Cl.⁵: **B 32 B 17/10, C 03 C 27/12**

(21) Numéro de dépôt: **87400610.9**

(22) Date de dépôt: **19.03.87**

(54) **Procédé de fabrication de vitrages feuilletés.**

(30) Priorité: **24.03.86 FR 8604155**

(43) Date de publication de la demande:
**14.10.87 Bulletin 87/42**

(45) Mention de la délivrance du brevet:
**02.05.90 Bulletin 90/18**

(84) Etats contractants désignés:
**BE DE ES FR GB IT SE**

(56) Documents cités:
**FR-A-2 398 606**
**US-A-3 505 160**
**US-A-3 881 043**
**US-A-3 900 446**
**US-A-4 177 099**

(73) Titulaire: **SAINT-GOBAIN VITRAGE**
**INTERNATIONAL**
**18, avenue d'Alsace**
**F-92400 Courbevoie (FR)**

(72) Inventeur: **Bravet, Jean-Louis**
**5 Avenue du Moulin**
**F-60150 Thourotte (FR)**
Inventeur: **Crux, Noel**
**Résidence du Parc 40 Rue d'Amiens**
**F-60200 Margny les Compiègne (FR)**
Inventeur: **Abel, Jean-Claude**
**62 Rue Pierre Boucharinc**
**F-94430 Chennevière (FR)**
Inventeur: **Triebs, Friedrich**
**Dinkermichsweg 21**
**D-5100 Aachen (DE)**
Inventeur: **Raedisch, Helmer, Dr.**
**Nizzaallee 36**
**D-5100 Aachen (DE)**

(74) Mandataire: **Muller, René et al**
**SAINT-GOBAIN RECHERCHE 39, quai Lucien**
**Lefranc**
**F-93304 Aubervilliers (FR)**

Courier Press, Leamington Spa, England.

**Description**

La présente invention concerne la fabrication des vitrages feuilletés, en particulier des vitrages feuilletés formés d'un support monolithique ou feuilleté en verre et/ou en matière plastique et d'une feuille de matière plastique comprenant au moins une couche de polyuréthane.

Les vitrages décrits ci-dessus peuvent être utilisés notamment en tant que pare-brise de véhicule à moteur, en tant que lunettes arrière ou encore en tant que vitrages bâtiment. Le montage de ces vitrages dans la baie d'une carrosserie automobile par exemple, à l'aide d'un joint profilé en matière élastique est de plus en plus souvent remplacé par un montage par collage du vitrage directement sur la carrosserie. En effet, ce type de montage présente des avantages et notamment il permet le maintien du pare-brise dans la baie de la carrosserie en cas de choc violent, il peut facilement être automatisé et en outre il autorise un montage affleurant du vitrage à la carrosserie ce qui réduit le coefficient de pénétration du véhicule dans l'air.

Dans le cas du montage d'un vitrage feuilleté classique, c'est-à-dire d'un vitrage formé de deux feuilles de verre et d'une feuille intercalaire en un matériau absorbeur d'énergie tel que le polyvinylbutyral, le collage du vitrage sur un repli de la tôle de la carrosserie est réalisé par dépôt d'un cordon adhésif convenable sur une bordure émaillée disposée sur la périphérie de la face orientée vers l'habitacle, destinée à protéger l'adhésif des rayonnements U.V. et aussi destinée à cacher à la vue un joint de colle inesthétique.

Dans le cas des vitrages de sécurité visés dans le cadre de l'invention, formé d'un support rigide et d'une feuille de matière plastique souple, la bordure émaillée est réalisée sur la face du support orientée vers l'habitacle, c'est-à-dire celle au contact de la feuille dè matière plastique et en particulier au contact de la couche de polyuréthane. Cette bordure émaillée est pour ce type de vitrages de sécurité, source de difficultés de fabrication desdits vitrages et en particulier elle crée un problème d'adhésion de la feuille de matière plastique sur ladite bordure émaillée. Le problème peut être un collage insuffisant au moment même de la fabrication du vitrage, lors de l'opération d'assemblage préliminaire par calandrage lorsqu'on utilise cette opération pour l'assemblage. On peut ainsi observer dans certains cas un décollement instantané de la feuille de matière plastique à l'emplacement de la bordure émaillée, décollement qui ne peut être réparé au cours de l'opération d'assemblage définitif par un cycle d'autoclave par exemple.

Au cas même où il ne se produit pas de décollement immédiat, il s'avère que le collage n'est de toute façon généralement pas suffisamment fort, ou encore il s'avère qu'il s'altère lorsqu'on soumet le vitrage à des conditions climatiques plus rigoureuses que celles généralement rencontrées dans un atelier de fabrication de vitrages feuilletés, par exemple lorsqu'on place ledit vitrage dans une atmosphère très humide.

Lorsque la feuille de matière plastique n'a pas à remplir le rôle d'un absorbeur d'énergie, il est possible de résoudre le problème de l'adhésion en utilisant une feuille de matière plastique découpée à un format plus réduit de sorte qu'elle ne recouvre pas la bande émaillée. Le collage du vitrage se faisant alors comme dans le cas des vitrages feuilletés classiques par dépôt du joint de colle directement sur la bande émaillée.

Mais lorsque la feuille de matière plastique doit remplir le rôle d'un absorbeur d'énergie et qu'elle a les qualités requises pour cela, il est nécessaire de coller directement le pourtour de cette feuille sur la baie de la carrosserie. De sorte qu'une adhésion satisfaisante et qui se conserve dans le temps entre ladite feuille et le support est essentielle pour conférer au vitrage ses propriétés de sécurité.

Le document US—A—3 881 043 décrit le traitement d'une partie sélectionnée de l'interface d'un vitrage feuilleté verre-polyuréthane. La partie sélectionnée est par exemple la bordure du vitrage. Le traitement utilise un primaire à base d'un organo-silane. Ce document n'aborde pas le problème de l'adhésion d'une couche de polyuréthane sur une bordure émaillée dans un vitrage feuilleté.

L'invention propose un procédé de fabrication de vitrages feuilletés comprenant un support monolithique ou feuilleté en verre et/ou en matière plastique présentant sur une face une bordure émaillée, et une feuille de matière plastique comprenant au moins une couche de polyuréthane au contact de la face présentant la bordure émaillée, qui résout les problèmes d'adhésion entre la feuille de matière plastique et le support en procurant un collage qui satisfait aux normes de sécurité des vitrages feuilletés utilisés dans les véhicules à moteur notamment en tant que pare-brise.

Conformément à l'invention, on dépose avant l'assemblage du support avec la feuille de matière plastique, sur une zone périphérique correspondant essentiellement à la bordure émaillée, sur au moins une des deux faces de contact de la bordure émaillée et de la couche de polyuréthane, un primaire comprenant un mélange réactionnel présentant des groupements NCO libres, ces groupements étant susceptibles de réagir avec le support émaillée et avec la feuille de matière plastique et de former des liaisons de réticulation avec les autres composants du primaire au moment du cycle thermique de l'assemblage ultérieur, on assemble la feuille de matière plastique avec le support et on soumet le vitrage à un cycle thermique qui consiste généralement à placer le vitrage à une température d'environ 130°C pendant environ une heure. Ce cycle thermique provoque la réaction du primaire et par là, il fournit l'adhésion définitive en périphérie du vitrage.

Sous un des aspects de l'invention, le mélange réactionnel est formé des composants réactifs de départ usuels pour former un polyuréthane présentant une structure réticulée. Ces composants de départ usuels sont essentiellement un composant polyol et un composant isocyanate l'un ou l'autre, ou les deux présentant une fonctionnalité supérieure à 2 et/ou sont utilisés avec des quantités correspondant à un excès de groupement NCO par rapport aux groupements hydroxyles du composant polyol.

Le composant polyol comprend au moins un polyol long choisi parmi les polyétherdiols, les polyesterdiols ou les polycaprolactonediols, de masse moléculaire comprise entre 500 et 4000. Il comprend aussi au moins un diol court choisi parmi ceux utilisés couramment en tant qu'allongeur de chaine dans la préparation des polyuréthanes, on peut citer par exemple les: éthylèneglycol, propanediol-1,2, propanediol-1,3, butanediol-1,2, -1,3, -1,4, diméthyl-2,2, propanediol-1,3 (néopentylglycol), pentanediol-1,5, hexanediol-1,6, octanediol-1,8, décanediol-1,10, dodécanediol-1,12, cyclohexanediméthanol, bisphénol A, méthyl-2 pentanediol-2,4, méthyl-3 pentanediol-2,4, éthyl-2 hexanediol-1,3, triméthyl-2,2,4-pentanediol-1,3, diéthylèneglycol, triéthylèneglycol, tétraéthylèneglycol, butyne-2-diol-1,4, butènediol-1,4 et décynediol substitués et/ou éthérifiés, hydroquinone-bis-hydroxyéthyléther, bisphénol A éthérifiés par deux ou quatre groupes d'oxyde de propylène, acide diméthylolproponique.

Le composant polyol comprend avantageusement encore au moins un polyol de foctionnalité supérieure à deux et notamment des triols aliphatiques monomères tels le glycérol, le triméthylolpropane, des triols à chaines polyéther, des triols de polycaprolactone, la masse moléculaire de ces triols étant généralement comprise entre 90 et 1000, des polyols mixtes polyéther/polyester de fonctionnalité supérieure à 2, par exemple de fonctionnalité comprise entre 2 et 3.

Les proportions entre le polyol long, le diol court et le polyol de fonctionalité supérieure à 2 peuvent varier en fonction du choix des autres composants du primaire.

Le composant isocyanate comprend au moins un isocyanate choisi notamment parmi les isocyanates difonctionnels aliphatiques suivants: hexaméthylènediisocyanate (HMDI), 2,2,4-triméthyl-1,6-hexanediisocyanate (TMDI), bis 4-isocyanatocyclohexylméthane (Hylène W), bis 3-méthyl-4-isocyanatocyclohexylméthane, 2,2 bis (4-isocyanatocyclohexyl) propane, 3-isocyanatométhyl-3,5,5 triméthylcyclohexylisocyanate (IPDI), m-xylylènediisocyanate (XDI), m- et p-tétraméthylxylylènediisocyanate (m- et p-TMXDI), trans-cyclohexane-1,4 diisocyanate (CHDI), 1,3-(diisocyanatométhyl) cyclohexane (XDI hydrogéné) et les isocyanates à fonctionalité supérieure à 2 tels les biurets d'isocyanate ou les isocyanurates.

Le composant isocyanate peut le cas échéant comprendre un ou plusieurs isocyanates aromatiques. Cependant, pour des raisons de compatibilité du primaire avec la couche de polyuréthane à coller, il apparait préférable d'utiliser des isocyanates aliphatiques du même type que celui ou ceux utilisés pour la fabrication de la couche de polyuréthane.

Sous un autre aspect de l'invention le mélange réactionnel est formé d'une prépolymère d'uréthane à groupement NCO libres, d'au moins un polyol de fonctionalité supérieure à 2 et le cas échéant d'au moins un diol court.

Les prépolymères d'uréthane convenables sont obtenus par réaction d'un composant polyol avec un composant isocyanate, ce deuxième était pris en excès. Les prépolymères obtenus présentent généralement une teneur en groupements NCO libres comprise entre 0,1% et 15% en poids.

Sous un autre aspect de l'invention, le mélange réactionnel est formé d'un prépolymère à groupements OH libres, d'au moins un isocyanate de fonctionalité égale ou supérieure à 2, notamment un triisocyanate. Lorsque le mélange réactionnel ne contient qu'un diisocyanate, celui-ci est pris en excès par rapport aux OH libres du prépolymère, afin d'obtenir une réticulation du polyuréthane issu du primaire lors de l'assemblage définitif des éléments du vitrage feuilleté.

Les prépolymères à groupements OH libres convenables sont formés à partir d'un composant polyol et d'un composant isocyanate, le composant polyol étant pris en excès tel que le rapport des équivalents NCO/OH et compris entre 0,6 et 0,9 environ. Lorsque le rapport est inférieur à 0,6 le prépolymère n'est généralement pas satisfaisant car le primaire obtenu présente une cohésion insuffisante. D'un autre côté, lorsque le rapport est supérieur à 0,9, le primaire ne présente généralement pas suffisamment de collant.

Sous un autre aspect de l'invention, le mélange réactionnel est formé d'un polyuréthane essentiellement thermoplastique et d'au moins un isocyanate de fonctionalité supérieure à 2, notamment un biuret d'isocyanate ou un triisocyanurate.

En tant que polyuréthane convenable, on peut utiliser par exemple les polyuréthanes thermoplastique décrit dans la publication de brevet français 2 398 606. Par exemple, on peut prendre comme composant polyol des diols longs, associés le cas échéant avec des diols courts, allongeurs de chaines. En tant que diols longs, on peut prendre des polyesters aliphatiques tels que ceux formés à partir d'un ou plusieurs diacides, comme l'acide malonique, l'acide succinique, l'acide glutarique, l'acide adipique, l'acide subérique ou l'acide sébacique et de diols, comme le 1,2-éthanediol (éthylèneglycol), le 1,2-propanediol, le 1,3-propanediol, le 1,2-butanediol, le 1,3-butanediol, le 1,4-butanediol, le 2,2-diméthyl-1,3-propanediol (néopentylglycol), le 1,6-hexanediol, le 2-méthyl-2,4-pentanediol, le 3-méthyl-2,4-pentanediol, le 2-éthyl-1,3-hexanediol, le 2,2,4-triméthyl-1,3-pentanediol, le diéthylèneglycol, le triéthylèneglycol, les polyéthylèneglycols, le dipropylèneglycol, le tripropylèneglycol, les polypropylèneglycol ou le 2,2- bis (4-hydroxycyclohexyl)propane, éventuellement à l'état de mélange. Dans la préparation du polyester diol on peut ajouter des lactones comme le gamma-butyrolactone, le gamma-valérolactone, le delta-valérolactone et l'epsilon-caprolactone. Le poids moléculaire du polyester est avantageusement d'environ 500 à 4000 et de préférence d'environ 1000 à 2000.

Des polyéthers linéaires d'un poids moléculaire tombant dans les intervalles ci-dessus et s'obtenant,

3

par exemple, à partir d'oxyde d'éthylène, d'oxyde de 1,2-propylène et de tétrahydrofurane, peuvent également convenir en tant que diols longs.

Des exemples d'isocyanates difonctionnels aliphatiques pouvant être mis à réagir avec les diols ci-dessus (les polyesters et/ou les polyéthers) pour la formation du polyuréthane thermoplastique sont le 1,6-hexanediisocyanate, le 2,2,4-triméthyl-1,6-hexanediisocyanate, le 2,2,4-triméthyl-1,6-hexanediisocyanate, le 2,4,4-triméthyl-1,6-hexanediisocyanate, le 1,3- bis (isocyanatométhyl)benzène, le bis (4-iso-cyanatocyclohexyl)méthane, le bis (3-méthyl-4-isocyanatocyclohexyl)méthane, le 2,2-bis(4-isocyanatocyclohexyl)propane et le 3-isocyanatométhyl-3,5,5-triméthylcyclohexylisocyanate.

Le polyuréthane essentiellement thermoplastique peut encore être obtenu comme décrit dans la publication du brevet europeen EP—A—0 133 090 à partir d'un composant polyol et d'un composant isocyanate. A cette fin, le composant polyol comprend au moins un polyol long choisi parmi les polyétherdiols, les polyesterdiols ou les polycaprolactonediols, de masse moléculaire comprise entre 500 et 4000. Il comprend aussi au moins un diol court choisi parmi ceux utilisés couramment en tant qu'allongeur de chaine dans la préparation des polyuréthanes, on peut citer par exemple les éthylèneglycol, propanediol-1,2, propanediol-1,3, butanediol-1,2, -1,3, -1,4, diméthyl-2,2 propanediol-1,3 (néo-pentylglycol, pentanediol-1,5, hexanediol-1,6, octanediol-1,8, décanediol-1,10, dodécanediol-1,12, cyclohexanediméthanol, bisphénol A, méthyl-2 pentanediol-2,4, méthyl-3 pentanediol-2,4, éthyl-2 hexanediol-1,3, trimethyl- 2,2,4-pentanediol-1,3, diéthylèneglycol, triéthylèneglycol, tétraéthylèneglycol, butyne-2-diol-1,4, butènediol-1,4 et décynediol substitués et/ou éthérifiés, hydroquinone-bis-hydroxyéthyléther, bisphénol A éthérifiés par deux ou quatre groupes d'oxyde de propylène, acide diméthylolproponique.

Le composant polyol comprend avantageusement encore au moins un polyol de fonctionnalité supérieure à deux et notamment des triols aliphatiques monomères tels le glycérol, le triméthylolpropane, des triols à chaines poléther, des triols de polycaprolactone, la masse moléculaire de ces triols étant généralement comprise entre 90 et 1000, des polyols mixtes polyéther/polyester de fonctionnalité supérieure à 2, par exemple de fonctionnalité comprise entre 2 et 3.

Les proportions entre le polyol long, le diol court et le polyol de fonctionnalité supérieure à 2 peuvent varier en fonction du choix des autres composants du primaire.

Le composant isocyanate comprend au moins un isocyanate choisi notamment parmi les isocyanates difonctionnels aliphatiques suivants: hexaméthylenediisocyanate (HMDI), 2,2,4-triméthyl-1,6-hexanediisocyanate (TMDI), bis 4-isocyanatocyclohexylméthane (Hylène W), bis 3-méthyl-4-isocyanatocyclohexylméthane, 2,2 bis (4-isocyanatocyclohexyl)propane, 3-isocyanatométhyl-3,5,5 triméthylcyclohexylisocyanate (IPDI), m-xylylènediisocyanate (XDI), m- et p-tétraméthylxylylènediisocyanate (m- et p- TMXDI), trans-cyclohexane-1,4 diisocyanate (CHDI), 1,3-(diisocyanatométhyl) cyclohexane (XDI hydrogéné) et les isocyanates à fonctionalité supérieure à 2 tels les biurets d'isocyanate ou les isocyanurates.

Outre le mélange réactionnel décrit ci-dessus, le primaire utilisé dans le cadre de l'invention peut comprendre d'autre composants.

Il peut ainsi contenir un catalyseur tel un catalyseur d'étain par exemple le dibutyldilaurate d'étain, l'oxyde de tributylétain, l'octoate d'étain, un catalyseur organomercurique par exemple l'ester phenyl mercurique, un catalyseur amine par exemple le diazabicyclo-(2,2,2)-octane, le 1,8 diazabicyclo (5,4,0)-1 decene-7.

Le primaire peut aussi contenir un stabilisant tel le bis (2,2,6,6,-tétraméthyl-4-piperidyl) sebaçate, un antioxydant phénolique.

Le primaire peut encore contenir un organo-silane par exemple le gamma-aminopropyltriméthoxy-silane, le gamma-aminopropyltriéthoxysilane, le gamma-glycidoxypropyltriméthoxysilane, le gamma-mercaptopropyltriméthoxysilane etc. . .

Etant donné que le primaire est appliqué sous forme liquide comme décrit par la suite, il est généralement nécessaire d'y inclure un liquide organique, généralement un solvant ou un diluant du mélange réactionnel. A cette fin, on peut utiliser de la méthyléthylcétone, du tétrahydrofurane, du xylol, par exemple.

Le primaire peut être déposé en une fois sur au moins un des éléments à assembler, support ou feuille de matière plastique, sur la bordure émaillée du support et/ou sur la partie correspondante de la couche de polyuréthane de la feuille de matière plastique, appelée à venir au contact de la bordure émaillée.

Dans ce cas, le primaire est déposé juste avant l'assemblage. Le dépot peut être réalisé à l'aide d'un tampon, d'une brosse, d'une racle par exemple, ou encore par une pulvérisation rapprochée ou avec un masque.

Lorsque le primaire comprend un silane, il peut être déposé en une étape ou, dans une variante, il peut être déposé en deux étapes: une première étape précédant l'assemblage d'une durée pouvant varier de plusieurs minutes à plusieurs jours, suivi d'une deuxième étape juste avant l'assemblage.

Dans cette variante, la première étape consiste à déposer le silane sous forme d'une solution aqueuse à environ 1% dans un alcool ou un mélange d'alcool ou encore dans un mélange d'alcool et d'eau. L'alcool peut être choisi par exemple parmi l'éthanol, l'iso-propanol, etc... La deuxième étape consiste à déposer juste avant l'assemblage, les autres composants du primaire.

Le procédé selon l'invention s'applique en particulier à la fabrication d'un vitrage feuilleté comprenant un support monolithique ou feuilleté en verre et une feuille de matière plastique comprenant une couche

4

EP 0 241 337 B1

de polyuréthane ayant des propriétés d'adhésion orientée du coté du support en verre et une couche de polyuréthane ayant des propriétés de surface telle que résistance à la rayure et à l'abrasion, autocicatrisable et antilacérante, du coté orienté vers l'extérieur du vitrage, mais généralement vers l'intérieur de l'habitacle. Le support ayant bien entendu dans le cadre de l'invention une bordure émaillée du coté revêtu par la feuille de matière plastique.

La couche de polyuréthane qui est mise au contact du support en verre, outre les propriétés d'adhésion peut présenter des propriétés d'absorption d'énergie.

Des feuilles de matière plastique présentant à la fois une couche de polyuréthane ayant des propriétés d'adhésion et le cas échéant des propriétés d'absorbeur d'énergie, et une couche de polyuréthane ayant des propriétés de surface sont décrites par exemple dans les publications de brevets français 2 398 606, et européen 0 133 090.

La couche de polyuréthane ayant des propriétés de surface peut encore être formée à partir d'un mélange réactionnel comprenant un composant isocyanate plurifonctionnel et un composant polyol plurifonctionnel, éventuellement un catalyseur de réaction et d'autres substances auxiliaires, le composant isocyanate étant choisi parmi les polymères aliphatiques essentiellement trifonctionnels formés à partir du 1,6-hexaméthylènediisocyanate monomère, notamment ses biurets ou ses isocyanurates, ayant une teneur en radicaux NCO de 15 à 25% en poids et le composant polyol étant choisi parmi les polyesterpolyols plurifonctionnels ayant une teneur en radicaux OH de 3 à 12% en poids.

La bordure émaillée sur laquelle on fait adhérer selon l'invention la couche de polyuréthane est formée de façon bien connue par dépôt d'une pâte convenable par sérigraphie. Le traitement selon l'invention s'effectue donc sur la bordure émaillée après cuisson de l'émail. La pâte déposée est celle utilisée couramment dans la fabrication des vitrages à bordure émaillée.

D'autres avantages et caractéristiques de l'invention apparaitront dans les exemples décrits ci-après.

Les exemples suivants concerne la fabrication d'un pare-brise de sécurité comprenant une feuille de verre et une feuille de matière plastique formée d'une couche de polyuréthane ayant des propriétés d'adhésion et des propriétés d'absorbeur d'énergie et une couche de polyuréthane ayant des propriétés de surface et autocicatrisante. La feuille de verre est en verre recuit ou trempé et elle est munie d'une bande émaillée obtenue par un dépôt par sérigraphie avec une pâte d'émail adéquate.

Les émaux utilisés sont des émaux utilisés pour le collage des vitrages feuilletés classiques sur la baie de carrosserie. Ce sont par exemple des borosilicates de plomb sur médium acrylique polymérisable aux UV.

La feuille de matière plastique est obtenue par exemple de la façon suivante:

Sur un support en verre mobile défilant de manière continue, revêtu d'un agent de séparation qui peut être par exemple celui décrit dans la publication de brevet français 2 383 000, à savoir un produit d'addition modifié d'éthylène oxyde, on coule un mélange homogène avec les proportions suivantes de:

1000 g d'un polyéther d'un poids moléculaire d'environ 450 obtenu par condensation d'oxyde de 1,2-propylène avec du 2,2-bis (hydroxyméthyl)-1-butanol et ayant une teneur en radicaux hydroxyles libres d'environ 10,5 à 12%, contenant 1% en poids d'un stabilisant, 0,05% en poids d'un catalyseur à savoir du dilaurate de dibutylétain et 0,1% en poids d'un agent nappant,

1020 g d'un biuret de 1,6-hexanediisocyanate ayant une teneur en radicaux isocyanates libres d'environ 23,2%.

On utilise une tête de coulée telle que celle décrite dans la publication de brevet français 2 347 170. On forme une couche uniforme qui aprés polymérisation sous l'effet de la chaleur, par exemple environ 15 minutes à 120°C, présente une épaisseur d'environ 0,19 mm et des propriétés d'autocicatrisation.

Pour fabriquer la couche ayant des propriétés d'absorbeur d'énergie, on prépare au préalable le composant polyol en mélangeant un polytétraméthylèneglycol de masse moléculaire 1000 (par exemple le produit commercialisé sous l'appellation Polymeg 1000 par la société QUAKER OATS), avec du butanediol-1,4, et avec du polycaprolactonetriol, les proportions des trois constituants étant telles que le polytétraméthylèneglycol apporte 0,35 équivalent en groupes hydroxyles, le butanediol-1,4, en apporte 0,45 et le polycaprolactonetriol 0,20.

Au composant polyol on incorpore un stabilisant à raison de 0,5% en poids de la masse totale du composant polyol et du composant isocyanate, un agent nappant à raison de 0,05% en poids calculé de la même façon et un catalyseur à savoir du dilaurate de dibutylétain à raison de 0,02% en poids calculé de la même façon que précédemment.

Le composant isocyanate utilisé est du 3-isocyanatométhyl-3,5,5 triméthylcyclohexylisocyanate (IPDI) présentant des fonctions urées obtenues par hydrolyse partielle de l'IPDI et ayant une teneur en groupements NCO d'environ 31.5% en poids.

Les composants sont pris en quantités telles que le rapport NCO/OH est de 1.

Après dégazage sous vide des composants, le mélange porté à environ 40°C est coulé à l'aide d'une tête de coulée comme celle décrite dans la publication de brevet français 2 347 170, sur la couche de polyuréthane autocicatrisable formée précédemment. On forme ainsi une couche d'environ 0,53 mm d'épaisseur qui est soumis à un cycle de polymérisation consistant en 25 minutes de chauffage à 120°C environ.

La feuille à deux couches est retirée du support en verre et elle peut être manipulée aisément, stockée ou utilisée juste après pour la fabrication des vitrages feuilletés selon l'invention.

5

## EP 0 241 337 B1

Les exemples 1 à 6 sont relatifs à la fabrication de vitrages utilisant un traitement par des primaires comprenant un mélange réactionnel à base de prépolymère à groupements NCO libres obtenus comme décrits ci-après.

### Synthese Des Prépolymères à Groupements NCO Libres

**Prépolymère 1:**

On mélange dans un réacteur 183,75 g (0,35 eq) de polyadipate de butanediol-1,4 et de méthyl-2-butanediol-1,4 d'une masse moléculaire environ égale à 1000, (par exemple le produit commercialisé sous l'appellation T 1136) par la société HULS, 720 g de méthyléthylcétone en tant que solvant, 175,95 g (1,15 eq) de 3-isocyanatométhyl-3,5,5-triméthylcyclohexylisocyanate (IPDI) présentant des fonctions urées et une teneur en groupements NCO de 31,5% en poids.

On agite le mélange pendant 10 heures à 80°C. On obtient un prépolymère en solution, d'extrait sec d'environ 33%, contenant 3,1% en poids de NCO libres, par rapport au poids de l'extrait sec. La viscosité de la solution est d'environ 10 m Pas.

**Prépolymère 2:**

On mélange dans un réacteur successivement:
- 850 g de méthyléthylcétone en tant que solvant;
- 183,75 g (0,35 eq) de polyester T 1136;
- 13,5 g (0,15 eq) de butanediol-1,4;
- 175,95 g (1,15 eq) d'IPDI contenant des fonctions urée.

On agite le mélange pendant 24 heures à 50°C. On obtient un prépolymère en solution, d'extrait sec d'environ 30%. contenant 2,2% en poids de NCO libres par rapport au poids de l'extrait sec. La viscosité de la solution est d'environ 10 m Pas.

**Prépolymère 3:**

On mélange dans un réacteur successivement:
- 183,75 g (0,35 eq) de polyester T 1136;
- 20,25 g (0,45 eq) de butanediol-1,4;
- 175,95 g (1,15 eq) d'IPDI contenant des fonctions urée.

On agite le mélange pendant 1 heure à 50°C, puis on ajoute 850 g de méthyléthylcétone. On agite la solution obtenue pendant 22 heures à 50°C.

On obtient un prépolymère en solution, d'extrait sec d'environ 30%, contenant 1,2% en poids de NCO libres par rapport au poids de l'extrait sec. La viscosité de la solution est d'environ 10 m Pas.

**Prépolymère 4:**

- 127 g de méthyléthylcétone;
- 168 g (0,32 eq) de polyester T 1136;
- 18,45 g (0,41 eq) de butanediol -1,4;
- 175,95 g (1,15 eq) d'IPDI contenant des fonctions urées.

On agite le mélange pendant 20 heures à 50°C, jusqu' à obtenir le pourcentage théorique de fonctions NCO libres. On obtient un prépolymère en solution, d'extrait sec d'environ 74%, contenant 3,6% en poids de fonction NCO libres par rapport au poids de l'extrait sec. La viscosité de la solution est d'environ 1500 m Pas.

**Prépolymère 5:**

On opère de la même façon et avec les mêmes composants que pour la préparation du prépolymère 3, sauf qu'on remplace le polyester T 1136 par 175 g (0,35 eq) de polytétraméthylèneglycol de masse moléculaire 1000.

Les prépolymères décrits ci-dessus peuvent être conservés sous azote et à l'abri de la lumière. Ils sont stables pendant plusieurs semaines.

### Exemple 1

On mélange juste avant l'emploi, le prépolymère 1 avec 20,25 g (0,45 eq) d'un polycaprolactonetriol de masse moléculaire 300, 2,0 g de stabilisant Tinuvin 765, 0,080 g de catalyseur DBTL, 2,0 g de silane, à savoir du gamma-glycidoxypropyltriméthoxysilane.

Ce mélange est agité pendant 5 minutes à température ambiante pour homogénéisation. On obtient un primaire d'extrait d'environ 36% et de viscosité d'environ 10 m Pas.

On applique ce primaire à l'aide d'un tampon sur la bordure émaillée du vitrage pour obtenir une épaisseur de dépot sec d'environ 5 à 15 micromètres.

On laisse sécher environ 1 à 2 minutes à température ambiante avant d'effectuer l'opération d'assemblage par calandrage de la feuille de verre avec la feuille de matière plastique obtenue comme décrit précédemment, l'assemblage s'effectuant en orientant la couche de polyuréthane ayant des propriétés d'absorbeur d'énergie contre la face de la feuille de verre pourvue de la bande émaillée.

L'assemblage réalisé est ensuite soumis à un cycle d'autoclave de 1 heure sous une pression de 10 bars environ, à une température de 135°C.

6

Pour mettre en évidence les améliorations procurées par le procédé selon l'invention concernant l'adhésion périphérique de la feuille de matière plastique avec la bande émaillée, on a apprécié le collage immédiat au moment de l'assemblage par calandrage et on a effectué des mesures de résistance au cisaillement après le cycle d'autoclave.

L'ensemble des résultats est contenu dans le tableau 1.

### Exemple 2

On procède comme dans l'exemple 1, sauf qu'on prépare un primaire par mélange des composants suivants:

Au prépolymère 2, on ajoute 13,5 g (0,30 eq) de butanediol-1,4 20,0 g (0,20 eq) de Tinuvin 765 en tant que stabilisant, 0,080 g de dilaurate de dibutylétain en tant que catalyseur, 2,0 g de silane et 790 g de méthyléthylcétone, le silane étant ici comme dans les autres exemples du gamma-glycidoxypropyltriméthoxysilane.

On obtient un primaire d'extrait sec d'environ 20% et de viscosité d'environ 5 à 10 m Pas.

### Exemple 3

On procède comme dans l'exemple 1, sauf qu'on prépare un primaire par mélange des composants suivants:

Au prépolymère 3, on ajoute 20,0 g (0,2 eq) de polycaprolactonetriol, 2,0 g de Tinuvin 765 en tant que stabilisant, 0,080 g de dilaurate de dibutylétain (DBTL) en tant que catalyseur, 2,0 g de silane et 766 g de méthyléthylcétone.

On obtient un primaire d'extrait sec d'environ 20% et de viscosité d'environ 5 à 10 m Pas.

### Exemple 4

On procède comme dans l'exemple 1, sauf qu'on prépare un primaire par mélange des composants suivants:

Au prépolymère 4, on ajoute 27 g (0,27 eq) de polycaprolactonetriol, 2,0 g de Tinuvin 765 en tant que stabilisant, 0,080 g de DBTL, 2,0 g de silane, 1891 g de méthyléthylcétone.

On obtient un primaire d'extrait sec d'environ 17% et de viscosité d'environ 5 m Pas.

### Exemple 5

On procède comme dans l'exemple 1, sauf qu'on prépare un primaire par mélange des composants suivants:

Au prépolymère 3, on ajoute 20,0 g (0,2 eq) de polycaprolactonetriol, 68,25 g (0,35 eq) de biuret d'hexaméthylènediisocyanate, 2,34 g de Tinuvin 765 en tant que stabilisant, 0,093 g de DBTL, 2,34 g de silane, 1042 g de méthyléthylcétone.

On obtient un primaire, d'extrait sec d'environ 20% et de viscosité d'environ 5 m Pas.

### Exemple 6

On procède comme dans l'exemple 1, sauf qu'on prépare un primaire par mélange des composants suivants:

Au prépolymère 5, on ajoute 20,0 g (0,2 eq) de polycaprolactonetriol, 2,0 g de Tinuvin 765 en tant que stabilisant, 0,080 g de DBTL en tant que catalyseur, 2,0 g de silane et 780 g de méthyléthylcétone.

On obtient un primaire d'extrait sec d'environ 20% et de viscosité d'environ 5 à 10 m Pas.

Les exemples 7 à 9 sont relatifs à la fabrication de vitrages utilisant un traitement par des primaires comprenant un mélange réactionnel formé d'un composant polyol et d'un composant isocyanate.

### Exemple 7

On mélange juste avant l'emploi:

175 g (0,35 eq) de polytetraméthylèneglycol de masse moléculaire environ égale à 1000 (par exemple le produit commercialisé sous l'appellation Polymeg 1000 par la société Quaker Oats), 20,25 g (0,45 eq) de butanediol-1,4, 20 g (0,20 eq) de polycaprolactonetriol de masse moléculaire 300, 439 g de méthyléthylcétone 2 g de Tinuvin 765, 0,08 g de DBTL, 2 g de silane, 165 g (1,10 eq) d'IPDI à fonctions urées.

Le mélange est agité durant 2 minutes à la température ambiante.

Le primaire obtenu présente un extrait sec de 46%. La viscosité est de 4 m Pas.

On applique le primaire à l'aide d'un tampon sur la bordure émaillée de la feuille de verre pour obtenir une épaisseur de dépôt sec comprise entre 5 et 15 micromètres.

Après un séchage de 10 minutes à l'étuve à 50°C, on fabrique ensuite le vitrage feuilleté comme décrit dans l'exemple 1.

### Exemple 8

On opère comme dans l'exemple 7, mais en mélangeant juste avant l'emploi:

183,75 g (0,35 eq) de polyester T 1136, 20,25 g (0,45 eq) de butanediol-1,4, 20,0 g (0,20 eq) de polycaprolactonetriol de masse moléculaire 300, 439 g de méthyléthylcétone, 2 g de Tinuvin 765, 0,08 g de DBTL, 2 g de silane, 165 g (1,10 eq) d'IPDI à fonctions urées.

Le primaire obtenu a un extrait sec de 47% environ. La viscosité est de 5 m Pas.

### Exemple 9

On opère comme dans l'exemple 7, mais en mélangeant juste avant l'emploi:

219 g (0,35 eq) de polycaprolactonediol de masse moléculaire 1000 environ, 20,25 g (0,45 eq) de butanediol-1,4, 20,0 g (0,20 eq) de polycaprolactonetriol de masse moléculaire 300, 856 g de méthyléthylcétone, 2 g de Tinuvin 765, 0,08 g de DBTL, 2 g de silane, 1,65 g (1,10 eq) d'IPDI à fonctions urées.

Le primaire obtenu a un extrait sec de 50% environ. La viscosité est de 6 m Pas.

L'exemple 10 est relatif à la fabrication d'un vitrage utilisant un traitement par un primaire comprenant un mélange réactionnel contenant un prépolymère à terminaison OH.

### Exemple 10

On fabrique un prépolymère au préalable de la façon suivante:

A un mélange de 172,55 g (0,35 eq) de Polymeg 1000, 24,75 g (0,55 eq) de butanediol-1,4, et de 21,3 g (0,10 eq) de Desmophen 1140, on ajoute sous agitation 107,10 g (0,70 eq) d'IPDI contenant des fonctions urées, ainsi que 1,85 g de Tinuvin 765, 0,07 g de DBTL, 0,74 g de silane, à savoir du gamma-glycidoxypropyltriméthoxysilane. On laisse réagir sous agitation pendant 2 heures, à température ambiante.

Le prépolymère obtenu a un extrait sec de 50% et une viscosité de 100 m Pas.

Il peut être conservé sous atmosphère d'azote et à l'abri de la lumière.

A la solution précédente, on ajoute 45,9 g (0,30 eq) d'IPDI contenant des fonctions urées et une teneur en groupements NCO de 31,5% en poids, pour obtenir le primaire et ce juste avant son application sur la bordure émaillée.

On traite la bordure émaillée du vitrage comme dans les exemples précédents.

### Exemple 11

Cet exemple est relatif à la fabrication d'un vitrage utilisant un traitement par un primaire comprenant un mélange réactionnel contenant un polyuréthane thermoplastique et au moins un isocyanate de fonctionalité supérieure à 2.

Le vitrage fabriqué est ici un vitrage formé d'un support feuilleté, constitué de deux feuilles de verre et d'une feuille intercalaire en polyvinylbutyral, et d'une feuille de matière plastique présentant une couche de polyuréthane thermoplastique ayant des propriétés d'adhésion et une couche de polyuréthane thermodurcissable ayant des propriétés d'autocicatrisation et d'antilacération comme décrit par exemple dans la publication du brevet français 2 398 606, la feuille de verre recevant la couche de polyuréthane thermoplastique était munie d'une bordure émaillée.

Pour former le primaire, on mélange 7,5 g d'une polyuréthane thermoplastique, produit de réaction du bis 4-isocyanatocyclohexylméthane (Hylène W) et d'un polyester de l'acide adipique et de l'hexanediol et du néopentylglycol, 60,0 g de tétrahydrofurane, 15,0 g de méthyléthylcétone, 15,0 g de xylol et 0,1 g de gamma-glycidoxypropyltriméthoxysilane. Après homogénéisation, ce mélange peut être stocké.

Juste avant l'application du primaire sur la bordure émaillée du vitrage, on ajoute au mélange précédant 7,5 g d'un biuret d'hexaméthylènediisocyanate.

Le primaire est alors appliqué au tampon sur la bordure émaillée du support en verre du vitrage.

Le vitrage est ensuite assemblé comme dans les exemples précédents.

### Exemples Comparatifs

### Exemple 12

On fabrique un vitrage comme dans les exemples précédents, mais sans traiter la bordure émaillée par un primaire.

### Exemple 13

On fabrique un vitrage comme dans l'exemple 1 mais en remplaçant le primaire selon l'invention par une solution à environ 1% en poids de gamma-glycidoxypropyltriméthoxysilane dans de la méthyléthylcétone.

### Exemple 14

On fabrique un vitrage comme dans l'exemple 1, mais en remplaçant le primaire selon l'invention par une solution dans de la méthyléthylcétone d'un silane commercialisé sous l'appellation Y 4310 par la société Union Carbide.

Pour mettre en évidence les bonnes propriétés d'adhésion obtenues par le procédé selon l'invention, on fait subir à des échantillons de vitrage de 10 × 10 cm fabriqués selon les exemples précédents des tests de cisaillement.

Sur ces éprouvettes, on colle avec un cordon de mastic de collage un coupon métallique de 125 × 25 mm, préalablement traité avec un primaire pour métal, pour obtenir un joint de collage de section rectangulaire de 12,5 × 2 mm. La surface de collage est donc de 125 × 25 mm. Le mastic de collage est un polyuréthane utilisé pour la collage des pare-brise sur la baie de carrosserie. Un tel mastic est commercialisé sous l'appellation Betaseal par la société Gurit Essex.

Les tests sont effectués après au moins 168 heures de durcissement pour le collage, à température ambiante.

Les éprouvettes sont tractionnées en cisaillement selon deux plans parallèles dans un dynamomètre enregistreur à une vitesse de 10 mm/mn. On enregistre la force nécessaire pour la rupture du collage, force que l'on divise par la surface de collage pour obtenir la contrainte de rupture en MPa.

Ces mesures de cisaillement sont effectuées:

a) à "l'état neuf" sur éprouvettes laissées au moins 168 heures à la température ambiante.

b) sur éprouvettes ayant subi un cycle de cataplasme humide. A cet effet le joint de colle est entouré de morceaux de coton hydrophile humidifiés et l'éprouvette est placée dans un sac de polyéthylène étanche. On laisse l'ensemble durant 7 jours à l'étuve à 70°C puis 2 heures à −20°C et on retire les éprouvettes du sac. Après avoir enlevé les morceaux de coton, et laissé 2 heures au repos, à la température ambiante, on procède à la mesure. Les résultats sont rassemblés dans le tableau 1.

La colonne intitulée adhésion immédiate comporte les appréciations suivantes:

++ et + quand l'adhésion immédiate est très bonne et bonne, c'est à dire lorsqu'il n'y a aucun décollement périphérique au cours de l'opération de calandrage et après.

— quand on observe un décollement périphérique au cours du calandrage ou avant le cycle d'autoclave.

Tableau 1

| Exemples | Adhésion immédiate | Résistance au cisaillement | |
|---|---|---|---|
| | | à l'initial | après cataplasme |
| 1 | ++ | 5,8 | 1,5—2,5 |
| 2 | ++ | 5,0 | 2,4—3,1 |
| 3 | ++ | 5,0 | 2,3—2,5 |
| 4 | ++ | 5,3 | 1,5—4,6 |
| 5 | ++ | 5,0 | 2,3—3,5 |
| 6 | ++ | 4,5 | 2,1—2,3 |
| 7 | + | 4,5 | 1,1—1,9 |
| 8 | + | 5,0 | 2,0—3,5 |
| 9 | + | 5,1 | 1,4—2,3 |
| 10 | ++ | 6,0 | 0,6—1,6 |
| 11 | ++ | 5,0 | 0,8—1,6 |
| 12 | — | 5,0 | 0,7—1,6 |
| 13 | — | 5,0 | 0,7—1,6 |
| 14 | — | 5,0 | 0,9—1,2 |

Le tableau 1 met en évidence la bonne adhésion immédiate obtenue au cours du calandrage, et procurée par les primaires selon l'invention (exemple 1 à 11). Cette adhésion immédiate est insuffisante car on observe un décollement dans les autres cas (exemples 12 à 14).

La résistance au cisaillement conserve une valeur élevée lorsque la bordure émaillée a été traitée avec un primaire conforme à l'invention, même après le conditionnement en atmosphère humide.

Lorsqu'on n'utilise pas de primaire conformément à l'exemple 12, ou lorsqu'on utilise uniquement des silanes selon les exemples 13 et 14, la résistance au cisaillement après cataplasme humide présente des

9

valeurs trop faibles pour permettre un collage du vitrage sur la baie de la carrosserie par collage du joint de colle sur la feuille de matière plastique.

Les primaires utilisés dans les exemples 10 et 11 facilitent l'assemblage de la feuille de matière plastique avec le support. Néanmoins, les valeurs obtenues pour la résistance au cisaillement après cataplasme ne permettent pas un collage du vitrage sur la baie de la carrosserie par collage du joint de colle sur la feuille de matière plastique de revêtement.

## Revendications

1. Procédé de fabrication d'un vitrage feuilleté comprenant un support monolithique ou feuilleté en verre et/ou en matière plastique présentant sur une face une bordure émaillée, et une feuille de matière plastique comprenant au moins une couche de polyuréthane au contact de la face présentant la bordure émaillée, caractérisé en ce que l'on traite avant l'assemblage du support avec la feuille de matière plastique sur une zone correspondant essentiellement à la bordure émaillée, au moins une des deux faces de contact de la bordure émaillée avec la couche de polyuréthane par dépôt d'un primaire comprenant un mélange réactionnel présentant des groupements NCO libres, ces groupements NCO libres étant susceptibles de réagir avec le support émaillé et avec la feuille de matière plastique et de former des liaisons de réticulation avec les autres composants du primaire au moment du cycle thermique de l'assemblage ultérieur, on assemble la feuille de matière plastique avec le support et on soumet le vitrage à un cycle thermique permettant la réaction du primaire et l'adhésion définitive en périphérie du vitrage.

2. Procédé selon la revendication 1, caractérisé en ce que le mélange réactionnel comprend un composant polyol et un composant isocyanate.

3. Procédé selon la revendication 2, caractérisé en ce qu'au moins un des deux composants présente une fonctionalité supérieure à 2.

4. Procédé selon une des revendications 2 ou 3, caractérisé en ce que le composant isocyanate est pris en quantité telle que le rapport NCO/OH est supérieur à 1.

5. Procédé selon la revendication 1, caractérisé en ce que le mélange réactionnel comprend un prépolymère d'uréthane à groupements NCO libres et au moins un polyol de fonctionalité supérieure à 2.

6. Procédé selon la revendication 5, caractérisé en ce que le mélange réactionnel comprend, en outre, au moins un diol court.

7. Procédé selon une des revendications 5 ou 6, caractérisé en ce que le mélange réactionnel comprend, en outre, au moins un isocyanate de fonctionalité supérieure à 2.

8. Procédé selon la revendication 1, caractérisé en ce que le mélange réactionnel comprend un prépolymère à groupements OH libres et au moins un isocyanate de fonctionalité au moins égale à 2.

9. Procédé selon la revendication 8, caractérisé en ce que le mélange réactionnel comprend au moins un isocyanate de fonctionalité supérieure à 2.

10. Procédé selon une des revendications 8 ou 9, caractérisé en ce que le composant isocyanate est pris en excès par rapport aux OH libres du mélange réactionnel.

11. Procédé selon la revendication 1, caractérisé en ce que le mélange réactionnel comprend un polyuréthane et au moins un isocyanate de fonctionnalité supérieure à 2.

12. Procédé selon une des revendications 1 à 11, caractérisé en ce que le primaire contient, en outre, un catalyseur.

13. Procédé selon une des revendications 1 à 12, caractérisé en ce que le primaire contient, en outre, un stabilisant.

14. Procédé selon une des revendications 1 à 13, caractérisé en ce que le primaire contient, en outre, un silane.

15. Procédé selon une des revendications 1 à 14, caractérisé en ce que le primaire est une solution présentant un extrait sec compris entre 10 et 70% en poids.

16. Procédé selon une des revendications 1 à 15, caractérisé en ce que le primaire est préparé juste avant son application sur la partie adéquate du vitrage.

17. Procédé selon une des revendications 1 à 16, caractérisé en ce que le mélange réactionnel comprend les mêmes composants ou des compotants équivalents à ceux entrant dans la composition de la couche de polyuréthane destinée à être collée au support.

18. Procédé selon une des revendications 1 à 17, caractérisé en ce que la face du support revêtu de la bande émaillée est une feuille de verre.

19. Procédé selon une des revendications 1 à 18, caractérisé en ce que le cycle thermique consiste à porter le vitrage à 130°C environ pendant 1 heure environ.

20. Procédé selon une des revendications 1 à 19, caractérisé en ce qu'on assemble la feuille de matière plastique avec le support par une opération de calandrage.

## Patentansprüche

1. Verfahren zur Herstellung einer Verbundglasscheibe, die einen monolithischen Träger oder einen Glas- und/oder Kunststoffschichtträger, der auf einer seiner beiden Seiten einen glasierten Rand aufweist, sowie eine Schicht aus Kunststoff, die wenigstens eine Schicht aus Polyurethan aufweist, die mit der den

glasierten Rand aufweisenden Seite Berührung hat, umfaßt, dadurch gekennzeichnet, daß vor der Verbindung des Trägers mit der Kunststoff-Folie auf einer Zone, die im wesentlichen dem glasierten Rand entspricht, wenigstens eine der beiden Kontaktflächen des glasierten Randes mit der Polyurethanschicht durch Aufbringen eines Primers behandelt wird, der ein freie NCO-Gruppen aufweisendes Reaktionsgemisch enthält, wobei die freien NCO-Gruppen fähig sind, mit dem glasierten Träger und mit der Kunststoff-Folie zu reagieren und mit den anderen Komponenten des Primers im Augenblick des thermischen Zyklus der nachfolgenden Vereinigung Vernetzungsverbindungen zu bilden, daß die Kunststoff-Folie mit dem Träger verbunden wird, und daß die Scheibe einem thermischen Zyklus unterzogen wird, der eine Reaktion des Primers und schließlich die Adhäsion am Umfangsbereich der Glasscheibe ermöglicht.

2. Verfahren nach Anspruch 1, dadurch gekennzeichnet, daß das Reaktionsgemisch eine Polyolkomponente und eine Isocyanatkomponente enthält.

3. Verfahren nach Anspruch 2, dadurch gekennzeichnet, daß wenigstens eine der beiden Komponenten eine Funktionalität von mehr als 2 aufweist.

4. Verfahren nach Anspruch 2 oder 3, dadurch gekennzeichnet, daß die Menge der Isocyanatkomponente derart bemessen ist, daß das NCO/OH-Verhältnis mehr als 1 beträgt.

5. Verfahren nach Anspruch 1, dadurch gekennzeichnet, daß das Reaktionsgemisch ein Urethanmpräpolymer mit freien NCO-Gruppen enthält und wenigstens ein Polyol mit einer Funktionalität von mehr als 2 enthält.

6. Verfahren nach Anspruch 5, dadurch gekennzeichnet, daß das Reaktionsgemisch zusätzlich wenigstens ein kurzes Diol enthält.

7. Verfahren nach Anspruch 5 oder 6, dadurch gekennzeichnet, daß das Reaktionsgemisch zusätzlich wenigstens ein Isocyanat mit einer Funktionalität von mehr als 2 enthält.

8. Verfahren nach Anspruch 1, dadurch gekennzeichnet, daß das Reaktionsgemisch ein Präpolymer mit freien OH-Gruppen und wenigstens ein Isocyanat mit einer Funktionalität von wenigstens gleich 2 enthält.

9. Verfahren nach Anspruch 8, dadurch gekennzeichnet, daß das Reaktionsgemisch wenigstens ein Isocyanat mit einer Funktionalität von mehr als 2 enthält.

10. Verfahren nach Anspruch 8 oder 9, dadurch gekennzeichnet, daß die Isocyanatkomponente im Verhältnis zu den freien OH-Gruppen des Reaktionsgemisches im Überschuß genommen wird.

11. Verfahren nach Anspruch 1, dadurch gekennzeichnet, daß das Reaktionsgemisch ein Polyurethan und wenigstens ein Isocyanat mit einer Funktionalität von mehr als 2 enthält.

12. Verfahren nach einem der Ansprüche 1 bis 11, dadurch gekennzeichnet, daß der Primer zusätzlich einen Katalysator enthält.

13. Verfahren nach einem der Ansprüche 1 bis 12, dadurch gekennzeichnet, daß der Primer zusätzlich einen Stabilisator enthält.

14. Verfahren nach einem der Ansprüche 1 bis 13, dadurch gekennzeichnet, daß der Primer zusätzlich ein Silan enthält.

15. Verfahren nach einem der Ansprüche 1 bis 14, dadurch gekennzeichnet, daß der Primer eine Lösung darstellt, die einen Trockenextrakt von zwischen 10 und 70% Gewichtsprozent aufweist.

16. Verfahren nach einem der Ansprüche 1 bis 15, dadurch gekennzeichnet, daß der Primer unmittelbar vor seinem Aufbringen auf den entsprechenden Teil der Glasscheibe bereitet wird.

17. Verfahren nach einem der Ansprüche 1 bis 16, dadurch gekennzeichnet, daß das Reaktionsgemisch entweder die gleichen oder äquivalente Komponenten aufweist wie diejenigen, die die zum Aufkleben auf den Träger bestimmte Polyurethanschicht enthält.

18. Verfahren nach einem der Ansprüche 1 bis 17, dadurch gekennzeichnet, daß die Fläche des mit dem glasierten Rand beschichteten Trägers eine Glasschicht ist.

19. Verfahren nach einem der Ansprüche 1 bis 18, dadurch gekennzeichnet, daß der thermische Zyklus darin besteht, die Scheibe während etwa einer Stunde auf 130°C zu bringen.

20. Verfahren nach einem der Ansprüche 1 bis 19, dadurch gekennzeichnet, daß die Kunststoffschicht mit dem Träger durch Kalandrieren verbunden wird.

**Claims**

1. A method of making a laminated pane, comprising a monlithic or laminated support of glass and/or of plastics material possessing on one face an enamelled border, and a sheet of plastics material comprising at least one layer of polyurethane in contact with the face having the enamelled border, characterized in that, before the support is assembled with the sheet of plastics material, at least one of the two contact faces of the enamelled border with the polyurethane layer is treated over a zone corresponding substantially to the enamelled border by deposition of a primary comprising a reaction mixture possessing free NCO groups, these free NCO groups being capable of reacting with the enamelled support and with the sheet of plastics material and of forming cross-linking bonds with the other components of the primary at the time of the thermal cycle of the final assembling, that the sheet of plastics material is assembled with the support and that the pane is subjected to a thermal cycle making possible the reaction of the primary and the final bonding at the periphery of the pane.

11

2. A method according to Claim 1, characterized in that the reaction mixture comprises a polyol component and an isocyanate component.

3. A method according to Claim 2, characterized in that at least one of the two components has a functionality greater than 2.

4. A method according to Claims 2 or 3, characterized in that the isocyanate component is taken in a quantity such that the ratio NCO/OH is greater than 1.

5. A method according to Claim 1, characterized in that the reaction mixture comprises a prepolymer of urethane having free NCO groups and at least one polyol having a functionality greater than 2.

6. A method according to Claim 5, characterized in that the reaction mixture comprises, in addition, at least one short diol.

7. A method according to one of Claims 5 or 6, characterized in that the reaction mixture comprises, in addition, at least one isocyanate having a functionality greater than 2.

8. A method according to Claim 1, characterized in that the reaction mixture comprises a prepolymer having free OH groups and at least one isocyanate having a functionality at least equal to 2.

9. A method according to Claim 8, characterized in that the reaction mixture comprises at least one isocyanate having a functionality greater than 2.

10. A method according to one of Claims 8 or 9, characterized in that the isocyanate component is taken in excess relative to the free OH groups of the reaction mixture.

11. A method according to Claim 1, characterized in that the reaction mixture comprises a polyurethane and at least one isocyanate having a functionality greater than 2.

12. A method according to one of Claims 1 to 11, characterized in that the primary contains, in addition, a catalyst.

13. A method according to one of Claims 1 to 12, characterized in that the primary contains, in addition, a stabilizer.

14. A method according to one of Claims 1 to 13, characterized in that the primary contains, in addition, a silane.

15. A method according to one of Claims 1 to 14, characterized in that the primary is a solution comprising a dry extract ranging from 10 to 70% by weight.

16. A method according to one of Claims 1 to 15, characterized in that the primary is prepared just before its application onto the appropriate part of the pane.

17. A method according to one of Claims 1 to 16, characterized in that the reaction mixture comprises the same components as, or equivalent components to, those forming part of the composition of the polyurethane layer intended to be glued onto the support.

18. A method according to one of Claims 1 to 17, characterized in that the face of the support coated with the enamelled band is a sheet of glass.

19. A method according to one of Claims 1 to 18, characterized in that the thermal cycle consists of raising the pane to approximately 130°C for approximately 1 hour.

20. A method according to one of Claims 1 to 19, characterized in that the sheet of plastics material is assembled with the support by a calendering operation.